# EUROPEAN PATENT APPLICATION

(11) **EP 1 279 773 A1**
(43) Date of publication of application: **29.01.2003**
(21) Application number: 01306289.8
(22) Date of filing: 23.07.2001
(51) Int. Cl.: E03B 9/02, F16K 43/00

(54) **Maintainable fire hydrant**

(71) Applicant: Bartram, John Raymond, Hamilton, Leicester LE5 1TH (GB)
(72) Inventor: Bartram, John Raymond, Hamilton, Leicester LE5 1TH (GB)
(74) Representative: SERJEANTS

(57) **Abstract**

A fire hydrant incorporating a pivoting disc valve (3) below the obturator (7) that can, whilst pressure is equalised, be rotated across an orifice that conveys the water flow through the hydrant. On raising the obturator (7), a differential pressure is created forcing the disc valve (3) on to its seat, thereby sealing the orifice and allowing maintenance to take place of primary seals and the obturator assembly (7). This operation can be carried out with the pipeline at operating pressure. Once completed and re-assembled the obturator (7) is lowered onto its seal. As the sealing process is completed a seal clamp (5) forces the disc valve (3) off its seat thereby equalising the pressure and allowing the disc to be rotated from the direction of flow by operating spindle (4) thereby enabling normal use.

## Description

### Technical Field

This invention relates to a fire hydrant that is maintainable under pressure.

### Background Art

Fire Hydrants are employed extensively throughout the world as a means of providing a pressurised water supply to fire brigades for fire fighting.

In the United Kingdom, fire hydrants must comply in all respects with the requirements of British Standard BS750:1984, which was prepared under the direction of the Fire Standards Committee. Maintenance of installed fire hydrants is generally the responsibility of the water utility companies and can only be carried out after the mains pressure has been eliminated.

Although fire hydrants are manufactured to facilitate the maintenance of seals, it has become normal practice, due mainly to time constraints, to remove the defective item in its entirety and replace it with a new one from stock.

British Patent No. 1054155 describes a device which is used to isolate fluid control valves from a source of fluid. However, when the device is connected to a water supply, the operator must physically adjust a disc seal within the device from a normal inoperative position to a closed position against the pressure of the water flowing therethrough. Moving the disc seal from one position to the other against the pressure of the water supply requires considerable physical exertion and can cause premature deterioration of the disc seal.

This invention has been devised in order to overcome the problems associated with the prior art and in particular facilitates the maintenance of fire hydrants whilst the water main they are attached to remains pressurised at normal operating pressures.

### Summary of the Invention

According to the invention there is provided a maintainable fire hydrant comprising a pivoting disc valve situated adjacent an obturator and capable of rotation into a water flow path, CHARACTERISED IN THAT the pivoting disc valve and obturator are arranged such that in use the pivoting disc valve can be pivoted into the water flow path when the obturator is on its seat and subsequent movement of the obturator from its seat causes a pressure differential across the disc valve to force it into sealing contact with a seat to stem water flow from the hydrant, allowing maintenance thereof, subsequent movement of the obturator towards its seat causing contact between a portion of the obturator and the disc valve to lift the disc valve from its seat and so equalise the pressures on each side of the disc valve.

### The Drawings

A specific embodiment of the invention will now be described by way of example with reference to the accompanying drawings in which:
Figure 1 is a side view of a hydrant according to the invention in its normal operating condition;
Figure 2 is a plan, cut-away view of the hydrant in its normal operating condition with . disc valve idle;
Figure 3 is a side view of the hydrant with disc valve rotated to cover the flow orifice.
Figure 4 is a plan, cut-away view of the hydrant with the disc valve rotated to cover the flow orifice;
Figure 5 is a side view of the hydrant with its obturator raised to allow water flow;
Figure 6 is a side view of the hydrant with its obturator fully raised and the disc valve sealing on a seat;
Figure 7 is a side view of the hydrant with its obturator closing to seal after maintenance;
Figure 8 is a side view of the hydrant with its obturator fully sealed and the disc valve dropping from its seat in equalised pressure;
Figure 9 is a side view of the hydrant with its obturator fully sealed and disc valve rotated away from the area of water flow; and
Figure 10 is a plan, cut-away view of the hydrant with the disc valve rotated away from area of water flow.

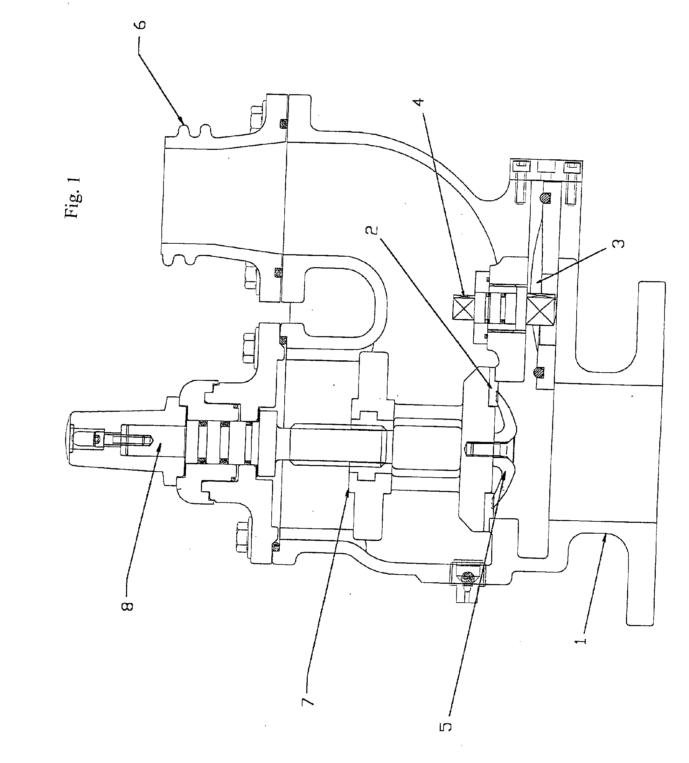

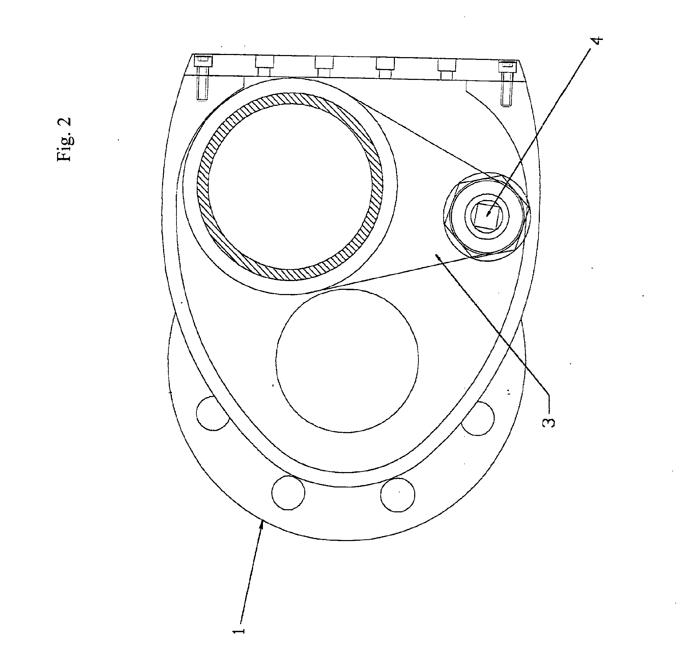

Figs. 1 & 2 show a side and plan view, respectively, of a hydrant according to the present invention in a normal operation mode. The hydrant has a body casting 1 which houses a disc valve 3 and an obturator 7. In the normal mode the disc valve 3 is fully rotated away from a line of water flow and the obturator 7 is in a fully closed and sealed position against its body casting 1 seat.

During normal operation the obturator 7 is raised and lowered from its sealing face 2 via spindle 8 to allow or stem water flow up through the outlet 6.

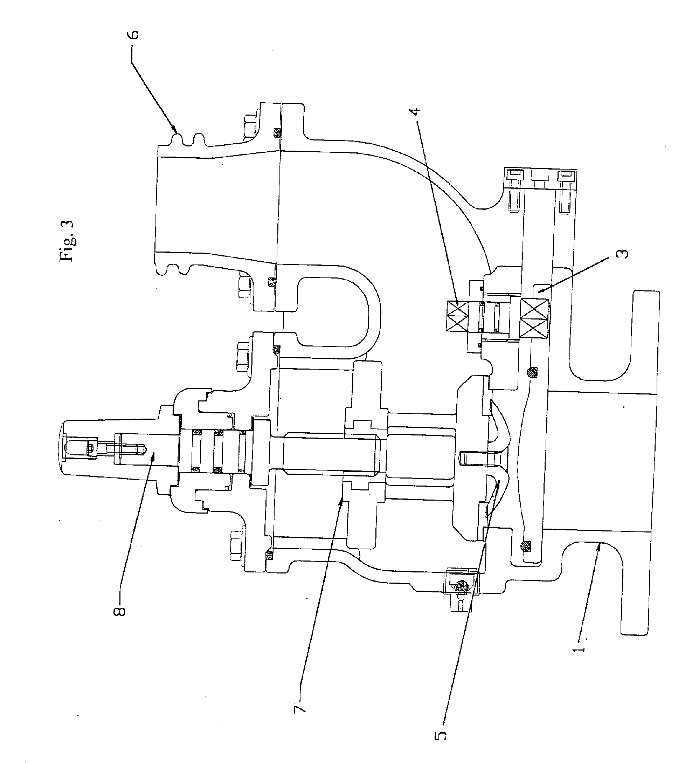

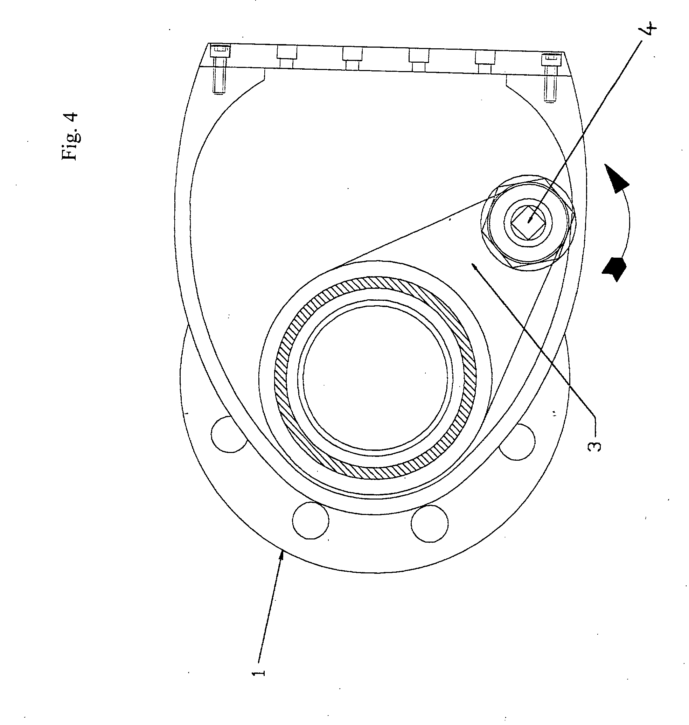

Should maintenance be required to the seals or obturator assembly 7, the operator ensures that the obturator 7 is in its fully closed and sealed position and the disc valve 3 is rotated by its operating spindle 4 into the line of water flow as shown in Figs. 3 & 4. Throughout this operation, the pressures on either side of the disc valve 3 are equal.

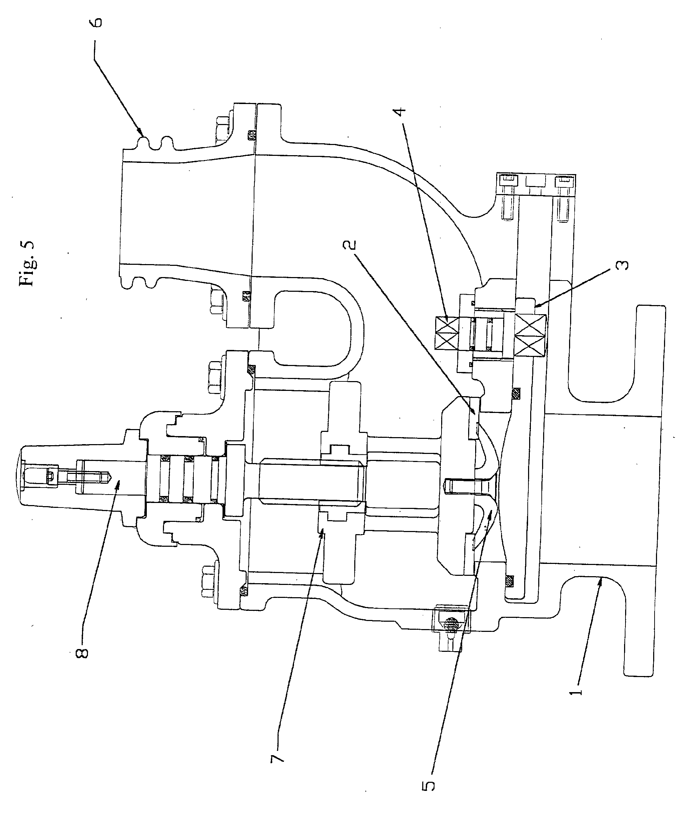

Once the disc valve 3 is in position, the obturator 7 can be raised by its spindle 8 as illustrated in Fig. 5 and water begins to pass the obturator seal 2 creating a differential pressure across the disc valve 3. The differential pressure acting upon the bottom surface of the disc valve 3 forces the disc 3 upwards into contact with its seating face in body casting 1. The pressure is sufficient to hold and seal the disc valve 3 against its sealing surface on body casting 1.

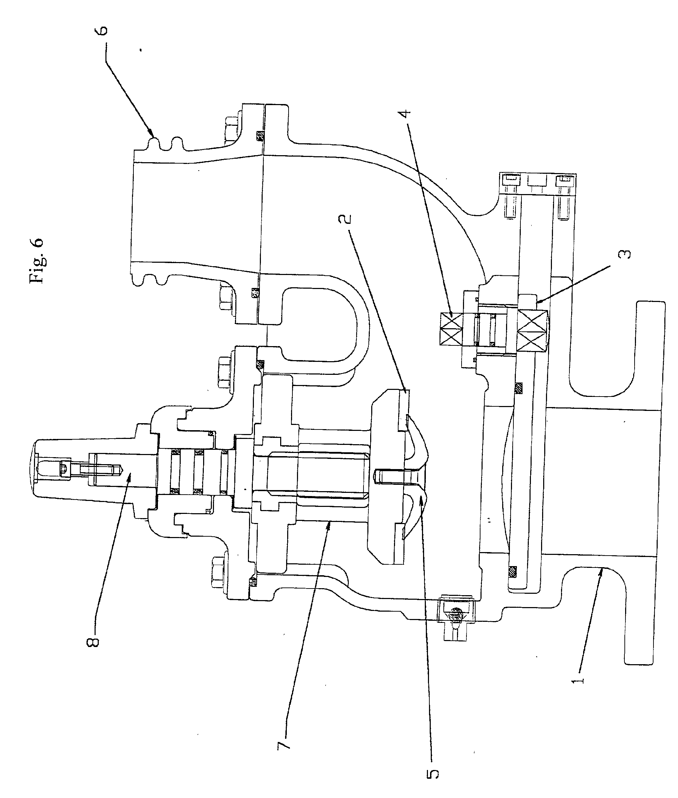

The obturator 7 can now be raised to its topmost point as shown in Fig. 6 and the whole obturator assembly 7 can be detached, after removal of its connecting bolts, to allow maintenance.

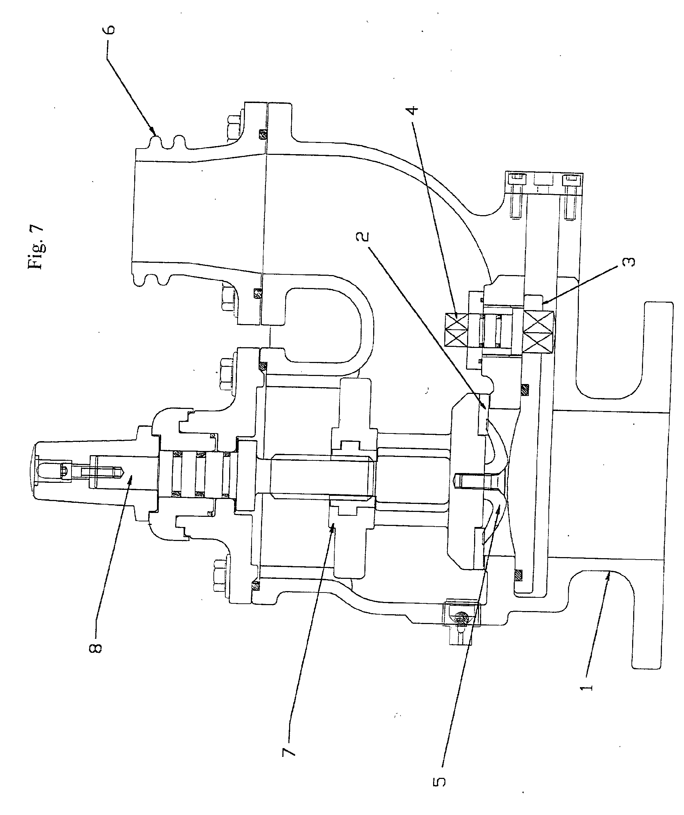

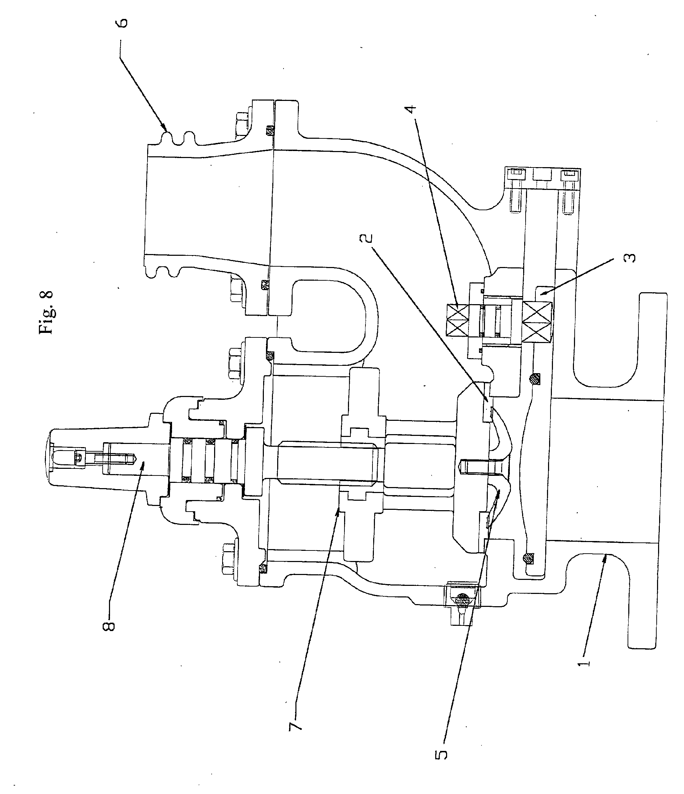

Once the maintenance is complete, the top works can be re-assembled onto the body. The hydrant obturator 7 can then be closed by rotating the hydrant spindle 8 as shown in Fig. 7. As the obturator (7) reaches the full extent of its downward travel, sealing against its rubber seal 2 as it does so, seal clamp 5 forces the disc valve 3 seal off its seat thereby equalising the pressure in the bottom end of the hydrant. The disc valve 3 as illustrated in Fig. 8 then drops to its lowest point in body casting 1 under the force of gravity.

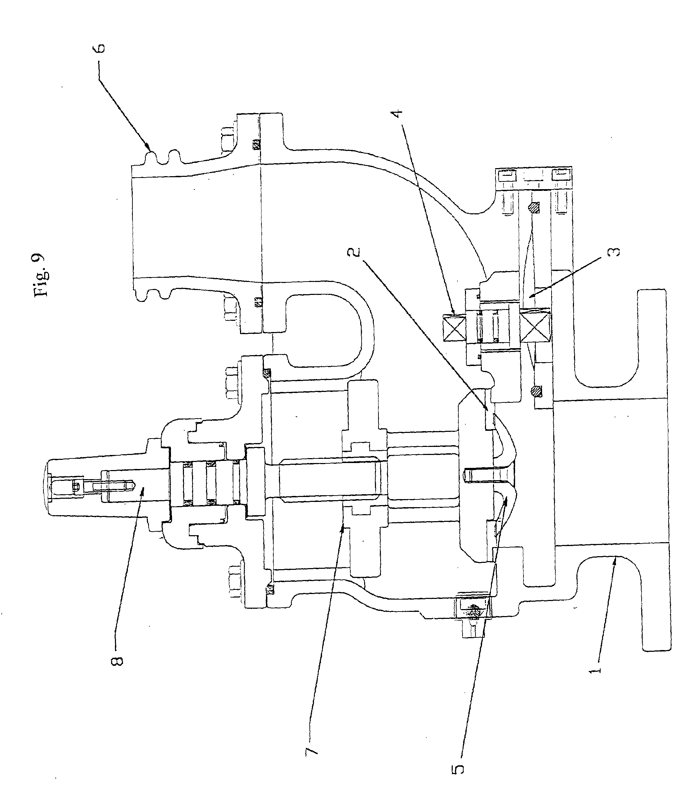

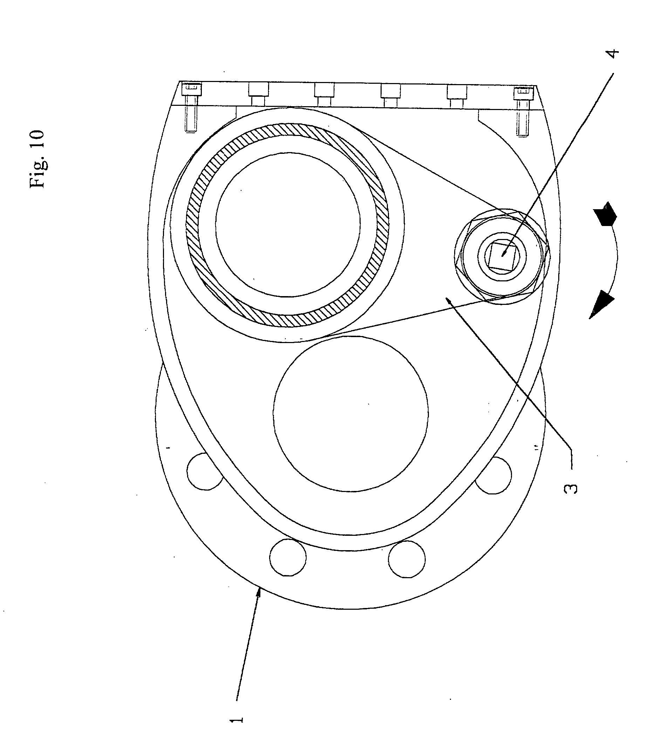

With the pressure equalized, the disc valve 3 can be rotated back to its position away from the line of flow, via rotation of spindle 4, as shown in Figs. 9 & 10, thereby allowing the hydrant to be used in its normal manner once more.

## Claims

1. A maintainable fire hydrant comprising a pivoting disc valve (3) situated adjacent an obturator (7) and capable of rotation into a water flow path, **CHARACTERISED IN THAT** the pivoting disc valve (3) and obturator (7) are arranged such that in use the pivoting disc valve (3) can be pivoted into the flow path when the obturator (7) is on its seat and subsequent movement of the obturator (7) from its seat causes a pressure differential across the disc valve (3) to force it into sealing contact with a seat to stem water flow from the hydrant, allowing maintenance thereof, subsequent movement of the obturator (7) towards its seat causing contact between a portion of the obturator (7) and the disc valve (3) to lift the disc valve (3) from its seat and so equalise the pressures on each side of the disc valve (3).

2. A maintainable fire hydrant as claimed in claim 1, wherein the disc valve (3) has a seal.

3. A maintainable fire hydrant as claimed in any preceding claim, wherein the disc valve (3) is rotatable by means of an independent rotating shaft (4) supported in a non-corrosible threaded bush.

4. A maintainable fire hydrant as claimed in any preceding claim, wherein the disc valve (3) is inserted through a side orifice which is sealed by a removable plate.

5. A maintainable fire hydrant as claimed any preceding claim wherein the portion of the obturator (7) which contacts the disc valve (3) is a seal clamp (5).

6. A maintainable fire hydrant as claimed in claim 5 in which the clamp (5) is non-corrosible.
